(19) Europäisches Patentamt / European Patent Office / Office européen des brevets

(11) **EP 3 381 100 B1**

(12) **FASCICULE DE BREVET EUROPEEN**

(45) Date de publication et mention de la délivrance du brevet:
**14.04.2021 Bulletin 2021/15**

(21) Numéro de dépôt: **16798762.7**

(22) Date de dépôt: **22.11.2016**

(51) Int Cl.:
***H02H 9/00*** *(2006.01)*

(86) Numéro de dépôt international:
**PCT/EP2016/078444**

(87) Numéro de publication internationale:
**WO 2017/089346 (01.06.2017 Gazette 2017/22)**

(54) **PROCÈDE ET DISPOSITIF DE MISE SOUS TENSION D'UN TRANSFORMATEUR DE PUISSANCE**

VERFAHREN UND VORRICHTUNG ZUM EINSCHALTEN EINES LEISTUNGSTRANSFORMATORS

METHOD AND DEVICE FOR SWITCHING ON A POWER TRANSFORMER

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **23.11.2015 FR 1561237**

(43) Date de publication de la demande:
**03.10.2018 Bulletin 2018/40**

(73) Titulaire: **General Electric Technology GmbH 5400 Baden (CH)**

(72) Inventeurs:
• **AIT ABDELMALEK, Farid 73100 Aix-les-Bains (FR)**
• **FANGET, Alain 01390 Tramoyes (FR)**
• **BORDES, Julien 74600 Annecy (FR)**

(74) Mandataire: **Brevalex 95, rue d'Amsterdam 75378 Paris Cedex 8 (FR)**

(56) Documents cités:
| | |
|---|---|
| EP-A1- 2 629 314 | WO-A1-02/095893 |
| WO-A1-2011/116488 | FR-A1- 2 924 279 |
| US-A1- 2009 097 173 | US-A1- 2012 293 896 |

**Description**

**DOMAINE TECHNIQUE**

Le domaine de l'invention est celui de la commande des transformateurs de puissance utilisés dans les réseaux de génération, transmission et distribution d'électricité.

L'invention concerne plus particulièrement une technique visant à minimiser les courants d'appels lors de la mise sous tension de tels transformateurs de puissance.

**ÉTAT DE LA TECHNIQUE ANTÉRIEURE**

Les transformateurs de puissance sont généralement mis sous ou hors tension par des disjoncteurs. Ces derniers manœuvrent un ou plusieurs pôles (ou phases) pour connecter/déconnecter le transformateur à une source de puissance.

Lors de leur mise sous tension (enclenchement), les transformateurs de puissance peuvent être le siège de phénomènes transitoires pouvant produire des courants de formes asymétriques, riches en harmoniques et de très grandes amplitudes. Ces courants sont appelés courants d'appels (« inrush currents » selon la terminologie Anglo-Saxonne). Ils trouvent leur origine dans le comportement d'hystérèse du noyau compris dans le transformateur de puissance, et sont associés à l'existence et la non prise en compte d'un flux magnétique rémanent subsistant dans ledit noyau malgré la mise hors tension du transformateur.

Il est cependant essentiel de minimiser les courants d'appels lors de la remise sous tension d'un transformateur de puissance.

En effet, les courants d'appels peuvent atteindre des niveaux importants, et parfois supérieurs aux niveaux de courants de défaut des transformateurs.

De tels niveaux de courants contraignent l'enroulement des transformateurs, créent des tensions temporaires sévères qui dégradent la qualité de la fourniture électrique, et provoquent des fonctionnements intempestifs des systèmes de protection du transformateur. De plus, les contraintes électrodynamiques exercées dans les enroulements du transformateur entrainent une réduction de la durée de vie de ces enroulements.

Pour contrôler les phénomènes transitoires, il est possible d'utiliser une résistance de pré-insertion (insérée temporairement en série avec les contacts du disjoncteur durant la phase d'enclenchement) qui permet d'amortir les courants d'appels générés lors de la mise sous tension du transformateur de puissance.

Toutefois, cette solution impacte de façon significative le coût du disjoncteur, en augmente les dimensions, et en réduit la fiabilité du fait de l'ajout de pièces mobiles. De plus, les résistances de pré-insertion ont une efficacité très limitée face aux phénomènes transitoires dans les transformateurs de puissance.

De manière alternative, il est possible d'effectuer la mise sous tension du transformateur de puissance au moyen d'un disjoncteur manœuvrant chacun des pôles de manière indépendante. Les pôles sont alors manœuvrés à des angles de phase (ou déphasages) fixes prédéterminés de manière à générer, au moment du réenclenchement, un flux magnétique prédéterminé. Cette mise sous tension est dite à « fermeture contrôlée ».

Cependant, cette fermeture contrôlée n'est réellement efficace que lorsque le flux magnétique rémanent du transformateur et le flux magnétique prédéterminé sont égaux. Autrement dit, la mise hors tension précédant la fermeture contrôlée doit également avoir été contrôlée. Cette mise hors tension est alors qualifiée d' « ouverture contrôlée ».

Ainsi, le niveau de performances de cette solution est très dégradé dès lors que la mise hors tension, précédant la mise sous tension du transformateur, ne permet pas de fixer de manière déterministe le flux magnétique rémanent. Dans ce cas, la mise hors tension est qualifiée « d'ouverture non contrôlée » (par opposition à ouverture contrôlée).

Toujours de manière alternative, la mise sous tension du transformateur peut être précédée d'une estimation du flux magnétique rémanent dans le transformateur. Les angles de phase des pôles manœuvrés par le disjoncteur sont alors ajustés en fonction du flux magnétique rémanent estimé, et de manière à ce que le flux magnétique créé au moment du réenclenchement du transformateur soit égal audit flux magnétique rémanent estimé.

A cet égard l'homme du métier trouvera dans le brevet EP 2705587 B1 une description détaillée d'une méthode de détermination du flux magnétique rémanent dans un transformateur de puissance.

Cette solution à angles de phase ajustés en fonction du flux magnétique rémanent estimé est un compromis de performances. Elle dépend cependant fortement de l'imprécision et de l'incertitude d'estimation du flux magnétique rémanent.

Autres méthodes pour gérer les courants d'appel d'un transformateur sont divulguées par WO 2011/116488, WO 02/095893, US 2012/293896. Un but de l'invention est alors de proposer un procédé de mise sous tension d'un transformateur de puissance qui permette de minimiser les courants d'appels de manière optimale.

**EXPOSÉ DE L'INVENTION**

Le but précédemment énoncé est atteint par un Procédé de mise sous tension d'un transformateur de puissance comprenant au moins une phase, par un disjoncteur adapté pour appliquer une tension dans une première phase parmi la au moins une phase, le procédé comprenant une étape de sélection entre une première ou une seconde séquence, et une étape de mise sous tension, à un instant donné, du transformateur de puissance selon la séquence précédemment sélectionnée, la première séquence étant adaptée pour générer un premier flux prédéterminé dans la première phase, au instant donné, égal à un flux rémanent prédéterminé consécutif à une mise hors tension du transformateur de puissance par une ouverture contrôlée du disjoncteur, la seconde séquence étant adaptée pour générer un flux dynamique dans la première phase, au instant donné, égal à une estimation du flux rémanent effectif dans le transformateur de puissance, la première séquence étant sélectionnée lorsque le flux rémanent effectif est le résultat d'une ouverture contrôlée ou lorsque le noyau du transformateur de puissance est démagnétisé par toute autre cause externe, la seconde séquence étant sélectionnée dans les autres cas.

Dans le cadre de la mise en œuvre de la présente invention, la Demanderesse a constaté que la mise sous tension du transformateur selon la première séquence, à la suite d'une ouverture contrôlée du disjoncteur, génère des courants d'appels inférieurs à 1 pu dans 98 % des mise sous tension (1 p.u. étant équivalent au courant crête nominal du transformateur).

Par contre, la mise en œuvre de la seconde séquence à la suite d'une ouverture contrôlée ne permet de garantir un courant inférieur à 1 p.u. que dans 90% des cas.

Ainsi, l'invention propose de ne mettre en œuvre la seconde séquence que lorsque le transformateur a été mis hors tension de manière non contrôlée, et de privilégier la première séquence lorsque cela est possible.

En effet, la première séquence, contrairement à la seconde séquence, n'est pas dépendante des incertitudes sur la détermination du flux rémanent effectif, et présente donc plus de robustesse pour minimiser les courants d'appels. La seconde séquence offre cependant les meilleurs compromis en termes de performances lorsque la mise sous tension est réalisée suite à une mise hors tension par une ouverture du disjoncteur non contrôlée.

Ainsi, l'invention introduit une sélection automatique entre la première et la seconde séquence de mise sous tension d'un transformateur qui permet de garantir statistiquement la performance la plus optimale en terme de réduction des courants d'appels en toutes circonstances.

Selon un mode de mise en œuvre, la mise sous tension du transformateur de puissance selon la première séquence comprend l'application d'une tension selon un premier angle de la forme d'onde de ladite tension, par rapport au instant donné, adapté pour, audit instant donné, que le premier flux prédéterminé soit généré.

Selon un mode de mise en œuvre, la mise sous tension du transformateur de puissance selon la seconde séquence comprend l'application d'une tension selon un second angle de la forme d'onde de ladite tension adapté pour, au instant donné, que le flux dynamique généré soit égal au flux rémanent effectif.

Selon un mode de mise en œuvre, la mise hors tension précédant l'établissement du flux rémanent dans le transformateur de puissance est détectée par le passage de la tension efficace de la au moins une phase du transformateur de puissance en-dessous d'une valeur seuil prédéterminée.

Selon un mode de mise en œuvre, lequel l'instant de mise hors tension de la au moins une phase est déterminé par la sortie d'un modèle périodique glissant de la tension aux bornes de là au moins une phase.

Selon un mode de mise en œuvre, l'instant de mise hors tension de la au moins une phase est déterminé par la détection de la différence entre une valeur représentative d'une tension source d'une source de puissance (4) et la tension aux bornes de la au moins une phase, la source de puissance (4) étant connectée au transformateur de puissance (2) via le disjoncteur (3) pour appliquer la tension source à la au moins une phase.

Selon un mode de mise en œuvre, l'étape de sélection entre la première séquence et la seconde séquence comprend l'analyse de l'instant de mise hors tension de la au moins une phase du transformateur de puissance.

Selon un mode de mise en œuvre, le flux rémanent est estimé par intégration de la tension aux bornes de la au moins une phase.

Selon un mode de mise en œuvre, le transformateur de puissance est triphasé, et la première phase mise sous tension lors de la seconde séquence est la phase, parmi les trois phases du transformateur de puissance, qui présente le champ rémanent le plus important après mise hors tension.

L'invention concerne également un dispositif de contrôle des pôles d'un disjoncteur, ledit disjoncteur étant connecté entre une source de puissance et un transformateur de puissance comprenant au moins une phase, le dispositif de contrôle étant destiné à minimiser les courants d'appels lors de la mise sous tension du transformateur de puissance, ledit dispositif comprenant :

- un module d'état du transformateur de puissance adapté pour sélectionner une séquence parmi une première séquence et une seconde séquence de mise sous tension du transformateur de puissance, ladite première séquence étant adaptée pour générer un premier flux prédéterminé dans une première phase parmi la au moins une phase, au moment de la mise sous tension, le premier flux prédéterminé étant égal à un flux rémanent prédéterminé consécutif à une mise hors tension du transformateur de puissance par une ouverture contrôlée du disjoncteur, la seconde séquence étant adaptée pour générer un flux dynamique dans la première phase, au moment de la mise sous tension, égal à une estimation du flux rémanent effectif dans le transformateur de puissance, le module d'état sélectionnant la première séquence lorsque le flux rémanent effectif est le résultat d'une ouverture contrôlée ou lorsque le noyau du transformateur de puissance est démagnétisé par toute autre cause externe, et la seconde séquence étant sélectionnée dans les autres cas,

- un module de manœuvre destiné à manœuvrer, de manière indépendante, les pôles du disjoncteur selon la séquence sélectionnée par le module d'état de manière à mettre sous tension le transformateur de puissance.

Selon un mode de mise en œuvre, le module de manœuvre est également adapté pour exécuter l'ouverture contrôlée du disjoncteur.

Selon un mode de mise en œuvre, le module d'état comprend des moyens de mesures des tensions aux bornes de la au moins une phase du transformateur de puissance et aux pôles du disjoncteur.

Selon un mode de mise en œuvre, le module d'état est adapté pour déterminer le flux rémanent effectif dans le transformateur de puissance après sa mise hors tension.

## BRÈVE DESCRIPTION DES DESSINS

D'autres caractéristiques et avantages apparaîtront dans la description qui va suivre des modes de mise en œuvre du Procédé de mise sous tension d'un transformateur de puissance selon l'invention, donnés à titre d'exemples non limitatifs, en référence aux dessins annexés dans lesquels :

- La figure 1 présente un schéma de principe d'un système de génération, transmission ou distribution électrique d'un réseau de distribution d'électricité,
- La figure 2a et 2b illustrent deux modes de mise hors tension démagnétisante d'un transformateur triphasé,
- La figure 3 représente l'évolution temporelle des tensions des phases d'un transformateur de puissance dès sa mise hors tension de manière non contrôlée,
- La figure 4 illustre le principe de détection de la mise hors tension d'un transformateur triphasé, l'axe horizontal représente les tensions efficaces aux bornes des trois phase d'un transformateur triphasé en fonction du temps (sur l'axe horizontal),
- La figure 5a représente la mesure des tensions, en trait plein, VL1, VL2 et VL3 (sur l'axe vertical) aux bornes des phases P1, P2, et P3 d'un transformateur triphasé, ainsi que le modèle sinusoïdal (en traits interrompus), en fonction du temps (sur l'axe horizontal)
- La figure 5b illustre le principe de la datation fine de la mise hors tension des phases du transformateur, les valeurs d'écart quadratique moyen epm1, eqm2 et eqm3 sont représentées (sur l'axe vertical) en fonction du temps (sur l'axe horizontal)
- Les figures 6a et 6b représentent les flux magnétiques calculés (en Weber, selon l'axe vertical), en fonction du temps (selon l'axe horizontal) dans les phases du transformateur à la suite d'une ouverture contrôlée et d'une ouverture non contrôlée, respectivement, du disjoncteur.

## EXPOSÉ DÉTAILLÉ DE MODES DE RÉALISATION PARTICULIERS

Pour les différents modes de mise en œuvre, les mêmes références seront utilisées pour des éléments identiques ou assurant la même fonction, par souci de simplification de la description.

La présente invention décrit un procédé de mise sous tension d'un transformateur de puissance, faisant par exemple suite à la mise hors tension de ce dernier.

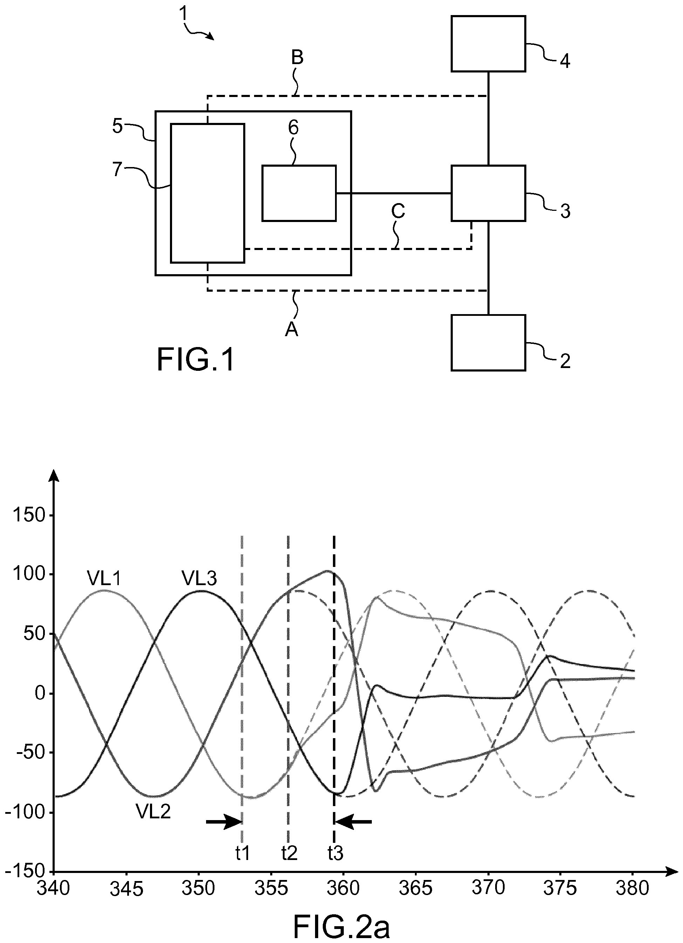

La figure 1 présente un schéma de principe d'un système de distribution électrique 1 d'un réseau de distribution d'électricité.

Le système de distribution électrique 1 comprend un transformateur de puissance 2. Le transformateur de puissance 2 peut être monophasé, triphasé ou plus généralement polyphasé. Chaque phase du transformateur de puissance 2 comprend des bornes d'entrées et des bornes de sorties.

Le système de distribution électrique 1 comprend également un disjoncteur 3 connecté entre une source de puissance 4 et les bornes d'entrées du transformateur de puissance 2. La source de puissance 4 est adaptée pour délivrer une tension/courant sinusoïdal monophasé ou triphasé (ou plus généralement polyphasé).

Le disjoncteur 3 est pourvu d'autant de pôles qu'il y a de phases dans le transformateur de puissance 2. Les pôles peuvent être manœuvrés de manière indépendante pour mettre sous/hors tension (connexion/déconnexion) chacune des phases du transformateur de puissance 2. Ainsi la mise sous (hors) tension du transformateur de puissance 2 est exécutée par la fermeture (ouverture) du disjoncteur 3. Une ouverture du disjoncteur 3 peut intervenir de manière contrôlée, et déterministe ou a contrario de manière non contrôlée (ou aléatoire). Les ouvertures contrôlées et non contrôlées d'un disjoncteur 3 seront décrites plus en détails dans la suite de l'exposé.

Le transformateur 2 peut également être mis sous (hors) tension au moyen d'un second disjoncteur connectant une seconde source de puissance aux bornes d'entrée du transformateur 2. Le second disjoncteur peut être commandé par un dispositif équivalent à un dispositif de contrôle 5 décrit dans la suite de la description.

Le système de distribution électrique 1 comprend, en outre, un dispositif de contrôle 5 (dispositif de commutation contrôlée) du disjoncteur 3 (« Controlled Switching Device » selon la terminologie Anglo-Saxonne). Le dispositif de contrôle 5 est adapté pour contrôler de manière indépendante chacun des pôles du disjoncteur 3, et ainsi assurer l'ouverture et la fermeture de ce dernier. Le dispositif de contrôle 5 est également adapté pour : mesurer la tension aux bornes d'entrées de chacune des phases du transformateur de puissance 2 (symbolisée par la ligne discontinue A sur la figure 1) ; mesurer la tension au bornes de la source de puissance 4 (symbolisée par la ligne discontinue B sur la figure 1) ; mesurer la tension des pôles du disjoncteur 3 (symbolisée par la ligne discontinue C sur la figure 1).

Le dispositif de contrôle 5 comprend également une mémoire, par exemple la mémoire d'un calculateur, destinée à mémoriser les tensions précitées en fonction du temps.

Dans la pratique, le dispositif de contrôle 5 mesure de manière continue les tensions précitées en fonction du temps et les mémorise dans sa mémoire. Ainsi, chacune des grandeurs mesurées en fonction du temps sera avantageusement utilisée pour exécuter une séquence d'ouverture ou de fermeture du disjoncteur 3.

Le dispositif de contrôle 5 calcule également les valeurs des tensions efficaces de chacune des phases du transformateur de puissance 2, à intervalles de temps réguliers (par exemple toutes les 5 ms). Comme nous le verrons par la suite, l'examen de la tension efficace aux bornes d'entrées du transformateur de puissance 2 permet de détecter une mise hors tension du transformateur de puissance 2 (ouverture du disjoncteur 3) .

La valeur de la tension efficace est donnée par la relation suivante :

$$V_{eff}(t_1) = \sqrt{\frac{\int_{t_1}^{t_1+T} V^2(t)dt}{T}}$$

Où T représente la période de la forme d'onde de la tension d'alimentation du système, V(t) la tension aux bornes du système considéré en fonction du temps, et $t_1$ l'instant considéré.

Le dispositif de contrôle 5 est, en outre, adapté pour calculer le flux magnétique dans chacune des phases du transformateur de puissance 2 à partir de la mesure en fonction du temps de la tension aux bornes d'entrées desdites phases.

Dans la pratique, la procédure de calcul du flux dans une phase du transformateur de puissance 2 est déclenchée dès la détection de la mise hors tension de ladite phase.

Par ailleurs, le dispositif de contrôle 5 comprend également une commande d'ouverture/fermeture des pôles du disjoncteur 3. Ladite commande d'ouverture/fermeture commande de manière indépendante les différents pôles du disjoncteur 3.

La mise sous tension du transformateur de puissance 2 peut faire suite à une ouverture contrôlée ou une ouverture non contrôlée du disjoncteur 3.

Lors d'une ouverture contrôlée, le disjoncteur 3 coupe le courant dans toutes les phases du transformateur de puissance 2 de manière à choisir (fixer) un flux rémanent désiré. Autrement dit, la procédure d'ouverture contrôlée comprend une séquence d'ouverture prédéterminée et fixe, de sorte que le flux rémanent dans le transformateur de puissance 2 soit toujours fixé de manière déterministe dans le transformateur de puissance 2. Nous parlons alors de flux rémanent prédéterminé.

Dans la pratique, lors d'une ouverture contrôlée, les pôles du disjoncteur 3 coupent les connexions entre les phases du transformateur de puissance 2 et la source de puissance 4, chacun des pôles étant manœuvré indépendamment à angles de phase fixes référencés relativement à la fréquence d'un signal de référence.

Dans le cas d'un transformateur de puissance 2 monophasé, le signal de référence est la forme d'onde de la tension aux bornes d'entrées du transformateur de puissance 2.

Pour un transformateur de puissance 2 polyphasé, par exemple triphasé, une phase est choisie comme signal de référence, les tensions des autres phases se déduisant implicitement par un déphasage constant du signal de référence.

Un transformateur de puissance 2 monophasé, alimenté par un courant de forme d'onde sinusoïdale, peut être mis hors tension, par manœuvre du pôle du disjoncteur 3, à l'instant où la tension d'entrée est nulle. Autrement dit, la mise hors tension intervient lorsque le flux magnétique dans le transformateur de puissance 2 est à son maximum. Cette configuration est particulièrement avantageuse car elle minimise les contraintes (« Stress » selon la terminologie Anglo-Saxonne) diélectriques appliquées au transformateur de puissance 2 durant la remise sous tension consécutive.

Il peut également être avantageux de mettre hors tension le transformateur de puissance 2 monophasé à un instant crête de la tension d'entrée. Autrement dit, la mise hors tension du transformateur de puissance 2 intervient lorsque le flux magnétique est nul. Ainsi, le transformateur de puissance 2 n'est pas sensible aux phénomènes de démagnétisation pouvant intervenir lorsqu'il est hors tension.

De manière générale, la procédure d'ouverture contrôlée du disjoncteur 3 connecté à un transformateur de puissance 2 polyphasé comprend une séquence non simultanée de manœuvre des pôles du disjoncteur 3. Lors d'une ouverture contrôlée du disjoncteur 3, chaque phase Pi est mise hors tension à un instant cible ti.

De préférence, la mise hors tension du transformateur de puissance 2 peut avoir également pour objectif de démagnétiser ce dernier.

Par exemple, la figure 2a illustre la mise hors tension démagnétisante d'un transformateur de puissance 2 triphasé. Les tensions VL1, VL2 et VL3 sont mesurées aux bornes des trois phases P1, P2 et P3, respectivement. Pour réaliser une mise hors tension démagnétisante, chaque phase est mise hors tension dans l'ordre P1, P2 et P3, aux instants cibles respectifs t1, t2 et t3 correspondant au passage de la tension à une valeur de tension crête. Cependant, la mise hors tension des phases d'un transformateur de puissance 2 à des instants rapprochés (par exemple, les instants ti sont compris dans une période du signal de référence) rend la détermination desdits instants difficile du fait de l'existence de couplages entre les phases du transformateur de puissance 2. Nous verrons par la suite que l'évaluation précise des instants de mise hors tension permet de faire la différence entre une ouverture contrôlée et une ouverture non contrôlée.

Par conséquent, il peut être avantageux, pour réduire l'influence du couplage entre les phases, de retarder, d'au moins une période du signal, la mise hors tension de la dernière phase sous tension par rapport aux deux autres phases.

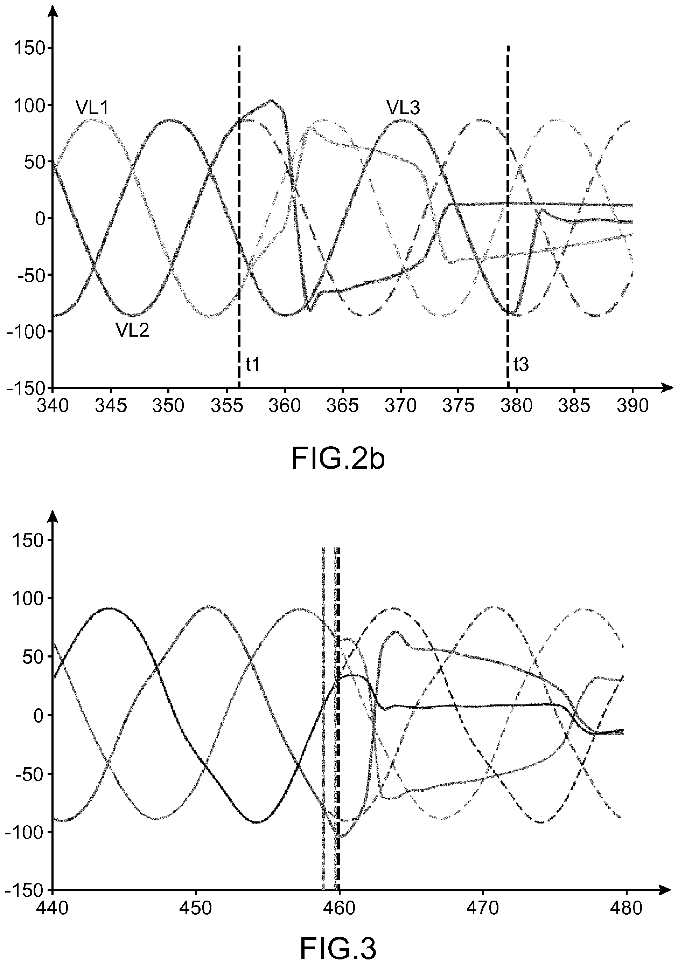

A titre d'exemple, tel que représenté à la figure 2b, le transformateur de puissance 2 triphasé peut d'abord comprendre la mise hors tension simultanée, à un instant t1, des phases P1 et P2, puis de la troisième phase P3 à une crête (maximum) de tension, à un instant t3. Ainsi, la différence entre l'instant t3 et l'instant t1 est plus importante que dans le cas présenté à la figure 2a. Par conséquent ladite différence est moins marquée par l'effet du couplage sur la détermination des instants de mise hors tension.

Ainsi, une manœuvre d'ouverture contrôlée du disjoncteur 3 est toujours exécutée de sorte que :

- les différences entre les instants de mise hors tension des phases du transformateur de puissance 2 sont prédéterminées et connues,
- le flux rémanent dans chacune des phases du transformateur de puissance 2 est prédéterminé et connu, après mise hors tension de chacune de phases. Autrement dit, le même flux rémanent prédéterminé est obtenu à chaque ouverture contrôlée du disjoncteur 3.

A contrario, le disjoncteur 3 peut être manœuvré de manière non contrôlée, et ainsi mettre en œuvre une ouverture non contrôlée. Une ouverture non contrôlée du disjoncteur 3 survient généralement lorsqu'il est nécessaire de protéger le transformateur de puissance 2 d'une éventuelle surtension. Une ouverture non contrôlée du disjoncteur 3 intervient alors par une mise hors tension des phases du transformateur de puissance 2 de manière simultanée, ou quasi-simultanée.

La mise hors tension des phases, comme nous le verrons à la figure 3, est ainsi exécutée à des instants quasi-identiques. Contrairement à une ouverture contrôlée, il n'est alors pas possible de choisir une séquence de manœuvre des pôles du disjoncteur 3 de manière à générer un flux rémanent prédéterminé. A la suite d'une ouverture non contrôlée du disjoncteur 3, le flux rémanent ne peut être connu que par une simulation ou une mesure indirecte.

A titre d'exemple, la figure 3 représente l'évolution temporelle des tensions des phases d'un transformateur de puissance 2 dès sa mise hors tension (par mise hors tension simultanée des trois phases du transformateur de puissance 2).

La distinction entre ouverture contrôlée et une ouverture non contrôlée est alors exécutée par mesure de la différence des instants de mise hors tension des phases du transformateur de puissance 2.

Pour une ouverture contrôlée, la différence entre l'instant de mise hors tension de la dernière phase et de la première phase peut être supérieure à 5ms , par exemple 10ms.

Pour une ouverture non contrôlée, la différence entre l'instant de mise hors tension de la dernière phase et la première phase peut être inférieure à 5ms, par exemple 2ms.

L'objet de la présente invention consiste à établir une stratégie pour la mise sous tension du transformateur de puissance 2 de manière à minimiser de manière robuste et répétitive l'amplitude des courants d'appels.

Le procédé selon l'invention comprend une étape de sélection entre une première et une seconde séquence de mise sous tension du transformateur de puissance 2.

L'étape de sélection est alors suivie de la mise sous tension du transformateur de puissance 2 selon la séquence de mise sous tension sélectionnée à l'étape de sélection.

Les étapes de sélection de la première et de la seconde séquence, et de mise sous tension peuvent être mises en œuvre par le dispositif de contrôle 5.

Le dispositif de contrôle 5 peut comprendre un module d'état 7.

L'étape de sélection parmi la première et la seconde séquence est avantageusement exécutée par le module d'état 7, comprenant par exemple un calculateur.

Le module d'état 7 peut comprendre la mémoire du dispositif de contrôle 5.

La première séquence est sélectionnée lorsque le flux rémanent effectif est le résultat d'une ouverture contrôlée du disjoncteur 3 ou lorsque le transformateur de puissance 2 est démagnétisé par toute autre cause externe, tandis que la seconde séquence est sélectionnée dans les autres cas.

Le dispositif de contrôle 5 peut comprendre un dispositif de manœuvre adapté pour recevoir du module d'état 7 des instructions de fermeture ou d'ouverture le disjoncteur 3.

Nous allons maintenant détailler l'étape de sélection entre la première séquence et la seconde séquence.

La tension aux bornes du transformateur de puissance 2 fait l'objet d'un suivi temporel mémorisé dans la mémoire du module de contrôle, et est avantageusement mise à profit dans l'étape de sélection de la séquence de mise sous tension.

L'étape de sélection comprend alors les étapes suivantes :

a) détermination pour chaque phase du transformateur de puissance 2 d'une fenêtre temporelle encadrant l'instant exact de la mise hors tension de ladite phase par seuillage des valeurs de tensions efficaces mesurées à ses bornes,

b) détermination des instants de mise hors tension des phases du transformateur de puissance 2, de manière à pouvoir déterminer si la mise hors tension résulte d'une ouverture contrôlée ou non contrôlée du disjoncteur 3,

L'étape a) comprend donc le calcul de la valeur de la tension efficace aux bornes du transformateur de puissance 2 et de la source de puissance 4 en fonction du temps.

Tel que précisé précédemment, les valeurs des tensions efficaces aux bornes de chacune des phases du transformateur de puissance 2 sont calculées, à intervalles de temps réguliers (par exemple toutes les 5 ms), et comparées aux valeurs de tensions efficaces aux bornes de la source de puissance 4.

La détection de la mise hors tension d'une phase est réalisée par seuillage de la valeur efficace aux bornes de ladite phase. Ainsi, le franchissement à la baisse, par la tension efficace, d'un seuil relatif exprimé en % de la valeur efficace de la tension source correspondante, permet de détecter la mise hors tension de chaque phase.

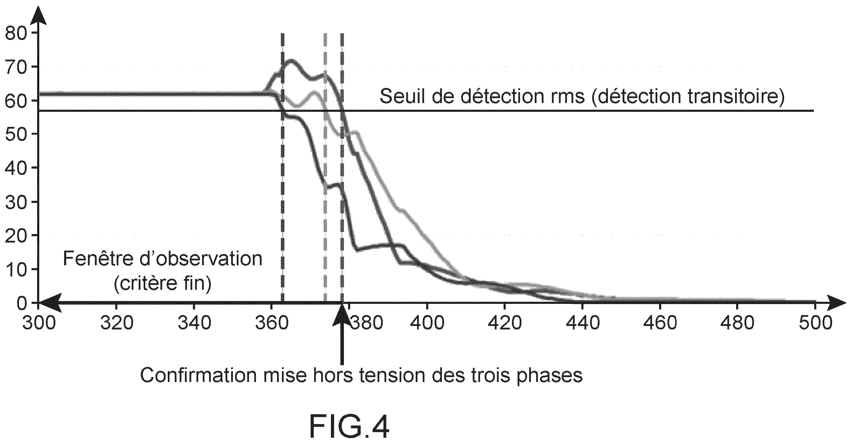

La figure 4 illustre la détection de la mise hors tension d'un transformateur de puissance 2 triphasé comprenant les phases P1, P2, P3. Les tensions Vrms1, Vrms2 et Vrms3 sont mesurées aux bornes des trois phases P1, P2 et P3, respectivement. Tant que les phases sont sous tension, les tensions efficaces, Vrms1, Vrms2 et Vrms3, sont égales, aux imprécisions des chaines de mesure près, à la tension efficace délivrée par la source de puissance 4. Les phases P1, P2, et P3 sont alors mises hors tensions à des instants, respectifs, t1, t2 et t3.

La mise hors tension de la phase P1 est détectée à l'instant trms1 (postérieur à l'instant de mise hors tension de la phase P1) pour lequel la tension efficace Vrms1 franchit un seuil de détection (représenté par la ligne discontinue horizontale sur la figure 4).

Par exemple, le seuil de détection peut correspondre compris entre 50 et 95%, par exemple 50%, de la valeur de la tension efficace délivrée par la source de puissance 4. Un instant ta1 permet de définir avec trms1 une première fenêtre temporelle encadrant l'instant t1 de mise hors tension de la phase P1. L'instant ta1 est un instant arbitrairement largement antérieur à la mise hors tension de P1, par exemple -500ms.

Des seconde et troisième fenêtres temporelles bornant, respectivement, les instants t2 et t3 sont déterminées selon le même protocole.

Un transformateur de puissance 2 est mis hors tension quand toutes ses phases sont hors tension, et l'instant de mise hors tension d'un transformateur de puissance 2 est l'instant pour lequel la dernière phase encore sous tension est mise hors tension.

La détection de la mise hors tension du transformateur de puissance 2 déclenche automatiquement le calcul des valeurs des flux dans chacune des phases du transformateur de puissance 2 en fonction du temps.

Le flux dans une phase du transformateur de puissance 2 peut être déterminé par intégration de la tension aux bornes de ladite phase. A cet égard, l'homme du métier retrouvera la méthodologie de calcul du flux dans une phase d'un transformateur de puissance 2 dans WO2012/150225.

Lors de l'étape b), le calculateur du dispositif de contrôle 5 exécute une datation fine de la mise hors tension de chacune des phases du transformateur de puissance 2 soit par la détection de sortie d'un modèle périodique glissant soit par la détection de la divergence entre les tensions corrigée de la source de puissance 4, et les tensions aux bornes d'entrées du transformateur de puissance 2. Le modèle périodique est avantageusement multi sinusoïdal, encore plus préférentiellement sinusoïdal.

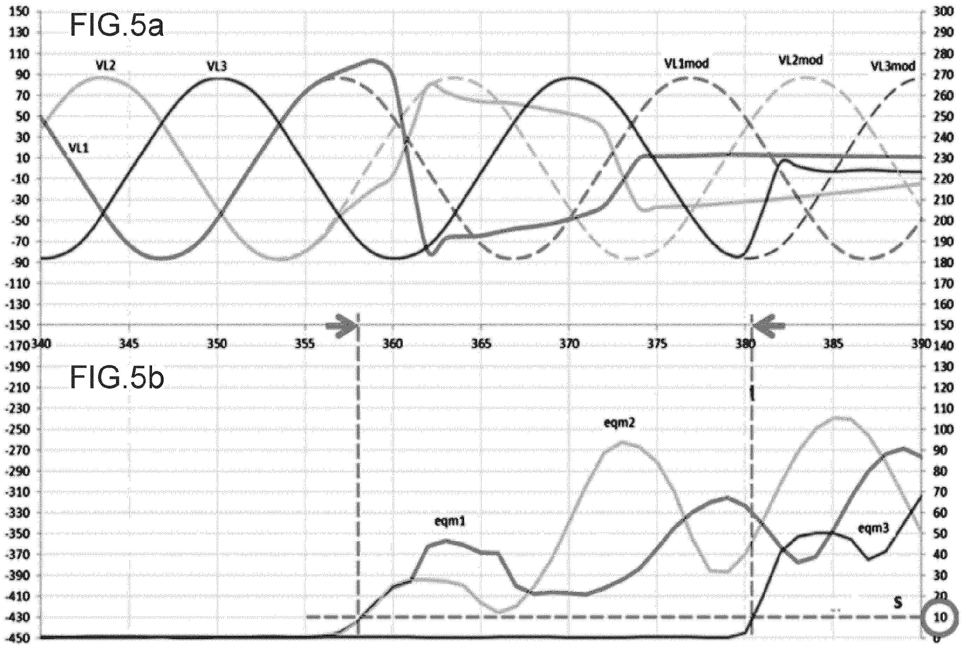

Ainsi, les figures 5a et 5b illustrent de la datation fine de la mise hors tension de chacune des phases d'un transformateur de puissance 2 triphasé par détection de sortie d'un modèle sinusoïdal glissant.

Sur la figure 5.a, les tensions VL1, VL2, et VL3 mesurées, respectivement, aux bornes des phases P1, P2, et P3 du transformateur de puissance 2 sont représentées en traits pleins et sont périodiques (sinusoïdales) lorsque lesdites phases sont sous tension (en régime établi).

La figure 5b représente les écarts quadratiques moyens eqm1, eqm2 et eqm3 en fonction du temps, entre les tensions réelles VL1, VL2, et VL3, et des modèles périodiques VL1mod, VL2mod et VL3mod.

Plus précisément, eqm1 est l'écart quadratique moyen entre VL1 et VL1mod, eqm2 est l'écart quadratique moyen entre VL2 et VL2mod, et eqm3 est l'écart quadratique moyen en VL3 et VL3mod.

Ainsi, tel que représenté à la figure 5b, la datation de la mise hors tension d'une phase est déterminée en faisant la différence quadratique moyenne entre la tension réelle aux bornes de ladite phase et un modèle périodique, avantageusement multi sinusoïdal, reconstruit avec l'historique de la tension en régime établi.

L'exemple de reconstruction représenté, sur la figure 5a, par les courbes VL1mod, VL2mod et VL3mod en traits interrompus peut avantageusement être reconstruit avec un modèle de Prony, et à cet égard l'homme du métier pourra consulter le brevet WO2011073163 détaillant la mise en œuvre du modèle de Prony.

L'instant ti de mise hors tension d'une phase Pi du transformateur de puissance 2 est alors l'instant pour lequel l'écart quadratique moyen entre la tension VLi au bornes de la phase Pi et le modèle périodique VLimod est supérieur à un seuil (par exemple le seuil S représenté sur la figure 5b). Ce seuil peut avantageusement être calculé en retenant une valeur au moins 10 fois supérieure à l'erreur quadratique moyenne calculée en début de fenêtre de recherche.

Une deuxième méthode de datation consiste en la détermination de l'instant où la différence quadratique moyenne entre la tension réelle aux bornes de ladite phase et une grandeur représentative de la tension source (par exemple la tension source corrigée) de la source de puissance correspondante franchit un seuil. Ce seuil est calculé de la même façon que dans la méthode précédente.

La correction de la tension de la source de puissance consiste à calculer périodiquement, par exemple toutes les 5 secondes, et tant que le disjoncteur est fermé et tant que le transformateur de puissance est sous tension, des coefficients correcteurs en gain et phase de façon à faire correspondre les tensions source et tensions aux bornes du transformateur, de façon à compenser les imperfections des chaines de mesure de tension.

Ainsi, les différences entre les instants de mise hors tension des phases peuvent alors être calculées.

Tel que précisé précédemment, une ouverture contrôlée correspond à une séquence prédéterminée de mise hors tension des phases fixant les différences d'instants de mise hors tension desdites phases à des différences prédéterminées. Par conséquent, si les différences entre les instants de mise hors tension des phases sont égales aux différences prédéterminées, nous sommes en présence d'un transformateur de puissance 2 mis hors tension par une ouverture contrôlée. Dans la pratique, seule la différence entre les instants de mise hors tension de l'avant dernière et de la dernière phase peut être calculée.

A l'opposé, des différences entre les instants de mise hors tension des phases nulles ou quasi nulles (par exemples inférieures à 1/6 période) sont une signature d'une mise hors tension du transformateur de puissance 2 par une ouverture non contrôlée.

Ainsi, l'examen des instants de mise hors tension des phases du transformateur de puissance 2 permet de discriminer entre une ouverture contrôlée et une ouverture non contrôlée.

Une mise sous tension du transformateur de puissance 2 faisant suite à une ouverture contrôlée du disjoncteur 3 est alors avantageusement mise en œuvre selon la première séquence.

La première séquence est adaptée pour générer un premier flux prédéterminé dans une première phase égal au flux rémanent prédéterminé.

La première séquence peut comprendre l'application d'une tension selon un premier angle de la forme d'onde de ladite tension adapté pour, au moment de la mise sous tension, générer le premier flux prédéterminé.

Le premier angle est avantageusement l'angle (prédéterminé) auquel la dernière phase a été mise hors tension lors de l'ouverture contrôlée.

Les autres phases du transformateur de puissance 2 sont alors mises sous tension de manière simultanée après la mise sous tension de la première phase.

Le temps séparant la mise sous tension de la première phase des autres phases est avantageusement égal à un quart de la période de la forme de d'onde de la tension délivrée par la source de puissance 4.

La première séquence de mise sous tension est très efficace pour minimiser les courants d'appels lors d'une mise sous tension du transformateur de puissance 2 faisant suite à une ouverture contrôlée du disjoncteur 3. Elle offre cependant un niveau de performances très dégradé en terme de minimisation des courants d'appels dans le cas où la mise hors tension du transformateur de puissance 2 précédant la mise sous tension n'est pas elle-même contrôlée (ouverture non contrôlée).

Par conséquent, une mise sous tension faisant suite à une ouverture non contrôlée du disjoncteur 3 est avantageusement mise en œuvre selon la seconde séquence.

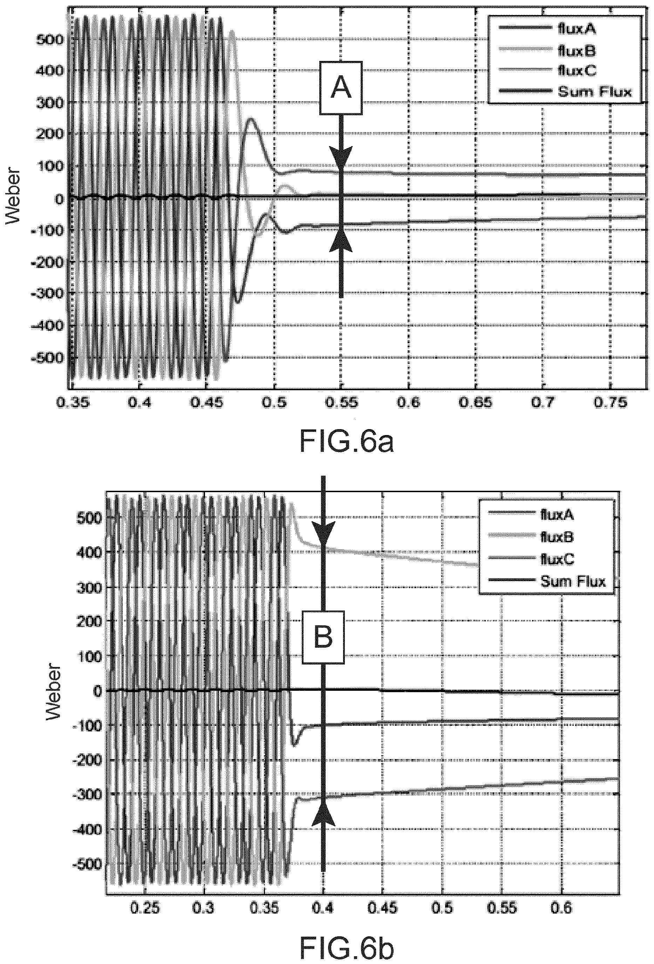

A la suite d'une mise hors tension du transformateur de puissance 2 par une ouverture non contrôlée du disjoncteur 3, le flux rémanent effectif n'est pas fixé de manière déterministe, et est alors obtenu par une mesure indirecte. Tel que représenté aux figures 6a et 6b, la zones A et B représentent les valeurs de flux rémanent à la suite d'une ouverture contrôlée et d'une ouverture non contrôlée, respectivement.

La seconde séquence est adaptée pour générer un flux dynamique dans la première phase, au moment de la mise sous tension, égale au flux rémanent effectif dans ladite première phase, mémorisé dans le dispositif de contrôle.

De manière avantageuse, la seconde séquence comprend l'application d'une tension selon un second angle de la forme d'onde de ladite tension adapté pour, au moment de la mise sous tension, générer un flux dynamique égal au flux rémanent effectif dans la première phase.

Les autres phases du transformateur de puissance 2 sont alors mises sous tension de manière simultanée après la mise sous tension de la première phase.

Le temps séparant la mise sous tension de la première phase des autres phases est avantageusement égal à un quart de la période de la forme de d'onde de la tension.

La seconde séquence permet de garantir un niveau de performances supérieures lorsque la mise hors tension du transformateur de puissance 2 est le résultat d'une ouverture non contrôlée du disjoncteur 3.

Dans le cadre de la mise en œuvre de la présente invention, la Demanderesse a constaté que la mise sous tension du transformateur de puissance 2 selon la première séquence, à la suite d'une ouverture contrôlée du disjoncteur 3, génère des courants d'appels inférieurs à 1 pu dans 98 % des mise sous tension (1 p.u. étant équivalent au courant crête nominal du transformateur de puissance 2).

Par contre, la mise en œuvre de la seconde séquence à la suite d'une ouverture contrôle ne permet de garantir un courant inférieur à 1 p.u. que dans 90% des cas.

Ainsi, l'invention propose de ne mettre en œuvre la seconde séquence que lorsque le transformateur de puissance 2 a été mis hors tension de manière non contrôlée, et de privilégier la première séquence lorsque cela est possible.

En effet, la première séquence, contrairement à la seconde séquence, n'est pas dépendante des incertitudes sur la détermination du flux rémanent effectif, et présente donc plus de robustesse pour minimiser les courants d'appels. La seconde séquence offre cependant le meilleur compromis en termes de performances lorsque la mise sous tension est faite suite à une mise hors tension par une ouverture du disjoncteur 3 non contrôlée.

Ainsi, l'invention introduit une sélection automatique entre la première et la seconde séquence de mise sous tension d'un transformateur de puissance 2 qui permet de garantir statistiquement la performance la plus optimale en terme de réduction des courants d'appels en toutes circonstances.

L'invention concerne également le dispositif de contrôle 5 du disjoncteur 3 destiné à mettre en œuvre le procédé de mise sous tension du transformateur de puissance 2. Le dispositif de contrôle 5 est destiné à minimiser les courants d'appels lors de la mise sous tension du transformateur de puissance 2.

Le dispositif de contrôle 5 comprend :

- un module d'état 7 du transformateur de puissance 2 adapté pour sélectionner une séquence parmi une première séquence et une seconde séquence de mise sous tension du transformateur de puissance 2, ladite première séquence étant adaptée pour générer un premier flux prédéterminé dans une première phase parmi la au moins une phase, au moment de la mise sous tension, le premier flux prédéterminé étant égal à un flux rémanent prédéterminé consécutif à une mise hors tension du transformateur de puissance 2 par une ouverture contrôlée du disjoncteur 3, la seconde séquence étant adaptée pour générer un flux dynamique dans la première phase, au moment de la mise sous tension, égal à une estimation du flux rémanent effectif dans le transformateur de puissance 2, le module d'état 7 sélectionnant la première séquence lorsque le flux rémanent effectif est le résultat d'une ouverture contrôlée ou que le noyau du transformateur de puissance 2 est démagnétisé, et la seconde séquence étant sélectionnée dans les autres cas,
- un module de manœuvre 6 destiné à manœuvrer, de manière indépendante, les pôles du disjoncteur 3 selon la séquence sélectionnée par le module d'état 7 de manière à mettre sous tension.

Le module de manœuvre 6 peut mettre en œuvre l'ouverture contrôlée du disjoncteur 3. Cependant la manœuvre du disjoncteur peut être exécutée indépendamment du module de manœuvre 6, lors d'une ouverture non contrôlée du disjoncteur 3

Le module de manœuvre 6 peut mettre en œuvre l'ouverture non contrôlée du disjoncteur 3.

Le module d'état 7 comprend des moyens de mesures des tensions aux bornes de la au moins une phase du transformateur de puissance 2 et aux pôles du disjoncteur 3.

Le module d'état 7 est adapté pour déterminer le flux rémanent effectif dans le transformateur de puissance 2 après sa mise hors tension.

**Revendications**

1. Procédé de mise sous tension d'un transformateur de puissance (2) comprenant au moins une phase, par un disjoncteur (3), adapté pour appliquer une tension dans une première phase parmi la au moins une phase, le procédé comprenant une étape de sélection entre une première ou une seconde séquence, et une étape de mise sous tension, à un instant donné, du transformateur de puissance (2) selon la séquence précédemment sélectionnée, la première séquence étant adaptée pour générer un premier flux prédéterminé dans la première phase, à l'instant donné, égal à un flux rémanent prédéterminé consécutif à une mise hors tension du transformateur de puissance (2) par une ouverture contrôlée du disjoncteur (3), la seconde séquence étant adaptée pour générer un flux dynamique dans la première phase, à l'instant donné, égal à une estimation du flux rémanent effectif dans le transformateur de puissance (2), la première séquence étant sélectionnée lorsque le flux rémanent effectif est le résultat d'une ouverture contrôlée ou lorsque le noyau du transformateur de puissance (2) est démagnétisé, la seconde séquence étant sélectionnée dans les autres cas.

2. Procédé selon la revendication 1, dans lequel la mise sous tension du transformateur de puissance (2) selon la première séquence comprend l'application d'une tension selon un premier angle de la forme d'onde de ladite tension, par rapport à l'instant donné, adapté pour, audit instant donné, que le premier flux prédéterminé soit généré.

3. Procédé selon la revendication 1 ou 2, dans lequel la mise sous tension du transformateur de puissance (2) selon la seconde séquence comprend l'application d'une tension selon un second angle de la forme d'onde de ladite tension adapté pour, à l'instant donné, que le flux dynamique généré soit égal au flux rémanent effectif.

4. Procédé selon l'une des revendications 1 à 3, dans lequel la mise hors tension précédant l'établissement du flux rémanent dans le transformateur de puissance (2) est détectée par le passage de la tension efficace de la au moins une phase du transformateur de puissance (2) en-dessous d'une valeur seuil prédéterminée.

5. Procédé selon la revendication 4, dans lequel l'instant de mise hors tension de la au moins une phase est déterminé par la sortie d'un modèle périodique glissant de la tension aux bornes de là au moins une phase.

6. Procédé selon la revendication 4, dans lequel l'instant de mise hors tension de la au moins une phase est déterminé par la détection de la différence entre une valeur représentative d'une tension source d'une source de puissance (4) et la tension aux bornes de la au moins une phase, la source de puissance (4) étant connectée au transformateur de puissance (2) via le disjoncteur (3) pour appliquer la tension source à la au moins une phase.

7. Procédé selon la revendication 5 ou 6, dans lequel l'étape de sélection entre la première séquence et la seconde séquence comprend l'analyse de l'instant de mise hors tension de la au moins une phase du transformateur de puissance (2).

8. Procédé selon l'une des revendications 1 à 7, dans lequel le flux rémanent est estimé par intégration de la tension aux bornes de la au moins une phase.

9. Procédé selon l'une des revendication 1 à 8, dans lequel, le transformateur de puissance (2) est triphasé, et la première phase mise sous tension lors de la seconde séquence est la phase, parmi les trois phases du transformateur de puissance, qui présente le champ rémanent le plus important après mise hors tension.

10. Dispositif de contrôle (5) des pôles d'un disjoncteur (3), ledit disjoncteur (3) étant connecté entre une source de puissance (4) et un transformateur de puissance (2) comprenant au moins une phase, le dispositif de contrôle (5) étant destiné à minimiser les courants d'appels lors de la mise sous tension du transformateur de puissance (2), ledit dispositif comprenant :

    - un module d'état (7) du transformateur de puissance (2) adapté pour sélectionner une séquence parmi une première séquence et une seconde séquence de mise sous tension du transformateur de puissance (2), ladite première séquence étant adaptée pour générer un premier flux prédéterminé dans une première phase parmi la au moins une phase, au moment de la mise sous tension, le premier flux prédéterminé étant égal à un flux rémanent prédéterminé consécutif à une mise hors tension du transformateur de puissance (2) par une ouverture contrôlée du disjoncteur (3), la seconde séquence étant adaptée pour générer un flux dynamique dans la première phase, au moment de la mise sous tension, égal à une estimation du flux rémanent effectif dans le transformateur de puissance (2), le module d'état (7) sélectionnant la première séquence lorsque le flux rémanent effectif est le résultat d'une ouverture contrôlée ou lorsque le noyau du transformateur de puissance (2) est démagnétisé, et la seconde séquence étant sélectionnée dans les autres cas,
    - un module de manœuvre (6) destiné à manœuvrer, de manière indépendante, les pôles du disjoncteur (3) selon la séquence sélectionnée par le module d'état (7) de manière à mettre sous tension le transformateur de puissance (2).

11. Dispositif selon la revendication 10, dans lequel le module de manœuvre (6) est également adapté pour exécuter l'ouverture contrôlée du disjoncteur (3).

12. Dispositif selon la revendication 10 ou 11, dans lequel le module d'état (7) comprend des moyens de mesures des tensions aux bornes de la au moins une phase du transformateur de puissance (2) et aux pôles du disjoncteur (3).

13. Dispositif selon l'une des revendications 10 à 12, dans lequel le module d'état (7) est adapté pour déterminer le flux rémanent effectif dans le transformateur de puissance (2) après sa mise hors tension.

**Patentansprüche**

1. Verfahren zum Einschalten eines Leistungstransformators (2), der mindestens eine Phase umfasst, durch einen Leistungsschalter (3), der geeignet ist, um eine Spannung in einer ersten Phase aus der mindestens einen Phase anzulegen, wobei das Verfahren einen Schritt des Auswählens zwischen einer ersten oder einer zweiten Sequenz, und einen Schritt des Einschaltens des Leistungstransformators (2) zu einem gegebenen Zeitpunkt gemäß der zuvor ausgewählten Sequenz umfasst, wobei die erste Sequenz geeignet ist, um zu dem gegebenen Zeitpunkt einen ersten vorbestimmten Fluss in der ersten Phase zu erzeugen, der gleich einem vorbestimmten Remanenzfluss infolge eines Abschaltens des Leistungstransformators (2) durch ein kontrolliertes Öffnen des Leistungsschalters (3) ist, wobei die zweite Sequenz geeignet ist, um zu dem gegebenen Zeitpunkt einen dynamischen Fluss in der ersten Phase zu erzeugen, der gleich einer Schätzung des effektiven Remanenzflusses im Leistungstransformator (2) ist, wobei die erste Sequenz ausgewählt wird, wenn der effektive Remanenzfluss das Ergebnis eines kontrollierten Öffnens ist, oder wenn der Kern des Leistungstransformators (2) entmagnetisiert ist, wobei die zweite Sequenz in den anderen Fällen ausgewählt wird.

2. Verfahren nach Anspruch 1, wobei das Einschalten des Leistungstransformators (2) gemäß der ersten Sequenz das Anlegen einer Spannung in einem ersten Winkel der Wellenform der Spannung in Bezug auf den gegebenen Zeitpunkt umfasst, der geeignet ist, damit zu dem gegebenen Zeitpunkt der erste vorbestimmte Fluss erzeugt wird.

3. Verfahren nach Anspruch 1 oder 2, wobei das Einschalten des Leistungstransformators (2) gemäß der zweiten Sequenz das Anlegen einer Spannung in einem zweiten Winkel der Wellenform der Spannung umfasst, der geeignet ist, damit der erzeugte dynamische Fluss zu dem gegebenen Zeitpunkt gleich dem effektiven Remanenzfluss ist.

4. Verfahren nach einem der Ansprüche 1 bis 3, wobei das Abschalten, das dem Entstehen des Remanenzflusses im Leistungstransformator (2) vorausgeht, anhand des Sinkens der Wirkspannung der mindestens einen Phase des Leistungstransformators (2) unter einen vorbestimmten Schwellenwert erkannt wird.

5. Verfahren nach Anspruch 4, wobei der Abschaltzeitpunkt der mindestens einen Phase anhand des Ausgangs eines periodischen Gleitmusters der Spannung an den Anschlüssen der mindestens einen Phase bestimmt wird.

6. Verfahren nach Anspruch 4, wobei der Abschaltzeitpunkt der mindestens einen Phase anhand des Erkennens der Differenz zwischen einem Wert, der für eine Quellenspannung einer Leistungsquelle (4) repräsentativ ist, und der Spannung an den Anschlüssen der mindestens einen Phase bestimmt wird, wobei die Leistungsquelle (4) über den Leistungsschalter (3) mit dem Leistungstransformator (2) verbunden ist, um die Quellenspannung an die mindestens eine Phase anzulegen.

7. Verfahren nach Anspruch 5 oder 6, wobei der Schritt des Auswählens zwischen der ersten Sequenz und der zweiten Sequenz das Analysieren des Abschaltzeitpunkts der mindestens einen Phase des Leistungstransformators (2) umfasst.

8. Verfahren nach einem der Ansprüche 1 bis 7, wobei der Remanenzfluss anhand von Integration der Spannung an den Anschlüssen der mindestens einen Phase geschätzt wird.

9. Verfahren nach einem der Ansprüche 1 bis 8, wobei der Leistungstransformator (2) dreiphasig ist, und die erste Phase, die bei der zweiten Sequenz eingeschaltet wird, die Phase aus den drei Phasen des Leistungstransformators ist, die nach Abschalten das stärkste Remanenzfeld aufweist.

10. Vorrichtung zum Steuern (5) der Pole eines Leistungsschalters (3), wobei der Leistungsschalter (3) zwischen eine Leistungsquelle (4) und einen Leistungstransformator (2) geschaltet ist, der mindestens eine Phase umfasst, wobei die Steuervorrichtung (5) dazu bestimmt ist, die Einschaltströme beim Einschalten des Leistungstransformators (2) zu minimieren, wobei die Vorrichtung umfasst:

- ein Zustandsmodul (7) des Leistungstransformators (2), das geeignet ist, um eine Sequenz aus einer ersten Sequenz und einer zweiten Sequenz zum Einschalten des Leistungstransformators (2) auszuwählen, wobei die erste Sequenz geeignet ist, um zum Einschaltzeitpunkt einen ersten vorbestimmten Fluss in einer ersten Phase aus der mindestens einen Phase zu erzeugen, wobei der erste vorbestimmte Fluss gleich einem vorbestimmten Remanenzfluss infolge eines Abschaltens des Leistungstransformators (2) durch ein kontrolliertes Öffnen des Leistungsschalters (3) ist, wobei die zweite Sequenz geeignet ist, um zum Einschaltzeitpunkt einen dynamischen Fluss in der ersten Phase zu erzeugen, der gleich einer Schätzung des effektiven Remanenzflusses im Leistungstransformator (2) ist, wobei das Zustandsmodul (7) die erste Sequenz auswählt, wenn der effektive Remanenzfluss das Ergebnis eines kontrollierten Öffnens ist, oder wenn der Kern des Leistungstransformators (2) entmagnetisiert ist, und wobei in den anderen Fällen die zweite Sequenz ausgewählt wird,
- ein Betätigungsmodul (6), das dazu bestimmt ist, die Pole des Leistungsschalters (3) gemäß der vom Zustandsmodul (7) ausgewählten Sequenz unabhängig zu betätigen, um den Leistungstransformator (2) einzuschalten.

11. Vorrichtung nach Anspruch 10, wobei das Betätigungsmodul (6) ebenfalls geeignet ist, um das kontrollierte Öffnen des Leistungsschalters (3) durchzuführen.

12. Vorrichtung nach Anspruch 10 oder 11, wobei das Zustandsmodul (7) Mittel zum Messen der Spannungen an den Anschlüssen der mindestens eine Phase des Leistungstransformators (2) und den Polen des Leistungsschalters (3) umfasst.

13. Vorrichtung nach einem der Ansprüche 10 bis 12, wobei das Zustandsmodul (7) geeignet ist, um den effektiven Remanenzfluss im Leistungstransformator (2) nach dessen Abschalten zu bestimmen.

## Claims

1. Method of switching on a power transformer (2) comprising at least one phase, by a circuit breaker (3), suitable for applying a voltage in a first phase of the at least one phase, the method comprising a step for selecting between a first or a second sequence, and a step of switching on, at a given time, the power transformer (2) according to the previously selected sequence, the first sequence being suitable for generating a first predetermined flux in the first phase, at the given time, equal to a predetermined residual flux following power-off of the power transformer (2) by a controlled opening of the circuit-breaker (3), the second sequence being suitable for generating a dynamic flux in the first phase, at the given time, equal to an estimate of the effective residual flux in the power transformer (2), the first sequence being selected when the effective residual flux is the result of a controlled opening or when the core of the power transformer (2) is demagnetized, the second sequence being selected in the other cases.

2. Method according to claim 1, wherein switching on the power transformer (2) according to the first sequence comprises applying a voltage at a first angle of the waveform of said voltage, relative to the given time, suitable for, at said given time, ensuring that the first predetermined flow is generated.

3. Method according to claim 1 or 2, wherein switching on the power transformer (2) according to the second sequence comprises applying a voltage at a second angle of the waveform of said voltage suitable for, at the given time, ensuring that the generated dynamic flux is equal to the effective residual flux.

4. Method according to one of claims 1 to 3, wherein the power-off preceding the establishment of the residual flux in the power transformer (2) is detected by the passage of the effective voltage of the at least one phase of the power transformer (2) below a predetermined threshold value.

5. Method according to claim 4, wherein the time of powering off the at least one phase is determined by the output of a sliding periodic model of the voltage across it from at least one phase.

6. Method according to claim 4, wherein the time of powering off the at least one phase is determined by detecting the difference between a value representative of a source voltage of a power source (4) and the voltage at the terminals of the at least one phase, the power source (4) being connected to the power transformer (2) via the circuit breaker (3) to apply the source voltage to the at least one phase.

7. Method according to claim 5 or 6, wherein the step of selecting between the first sequence and the second sequence comprises analysing the time of powering off of the at least one phase of the power transformer (2).

8. Method according to one of claims 1 to 7, wherein the residual flux is estimated by integration of the voltage across the at least one phase.

9. Method according to one of claims 1 to 8, wherein the power transformer (2) is three-phase, and the first phase switched on during the second sequence is the phase, among the three phases of the power transformer, which has the largest residual field after power off.

10. Device for controlling (5) the poles of a circuit-breaker (3), said circuit-breaker (3) being connected between a power source (4) and power transformer (2) comprising at least one phase, the control device (5) being designed to minimise call currents when switching on the power transformer (2), said device comprising:

   - a status module (7) of the power transformer (2) suitable for selecting a sequence from a first sequence and a second power-up sequence of the power transformer (2), said first sequence being suitable for generating a first predetermined flux in a first phase of the at least one phase, at the time of switching on, the first predetermined flux being equal to a predetermined residual flux following a power-off of the power transformer (2) by a controlled opening of the circuit breaker (3), the second sequence being suitable for generating a dynamic flow in the first phase, at the time of switching on, equal to an estimate of the effective residual flux in the power transformer (2), the status module (7) selecting the first sequence with the actual residual flux is the result of a controlled opening or when the power transformer (2) core is demagnetised, and the second sequence is selected in other cases,
   - an operating module (6) for independently operating the poles of the circuit breaker (3) according to the sequence selected by the status module (7) so as to switch on the power transformer (2).

11. Device according to claim 10, wherein the operating module (6) is also suitable for performing the controlled opening of the circuit breaker (3).

12. Device according to claim 10 or 11, wherein the status module (7) comprises means for measuring the voltages across the at least one phase of the power transformer (2) and the poles of the circuit breaker (3).

13. Device according to one of claims 10 to 12, wherein the status module (7) is suitable for determining the effective residual flux in the power transformer (2) after its power off.

FIG.1

FIG.2a

FIG.2b

FIG.3

FIG.4

EP 3 381 100 B1

EP 3 381 100 B1

FIG.5a

FIG.5b

FIG.6a

FIG.6b

18

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 2705587 B1
- WO 2011116488 A
- WO 02095893 A

- US 2012293896 A
- WO 2012150225 A
- WO 2011073163 A